# EUROPÄISCHE PATENTSCHRIFT

(11) **EP 2 362 329 B1**
(45) Veröffentlichungstag und Bekanntmachung des Hinweises auf die Patenterteilung: **23.07.2014**
(21) Anmeldenummer: 10001956.1
(22) Anmeldetag: 25.02.2010
(51) Int. Cl.: G06K 7/10, G06K 19/077

(54) **Einrichtung zur Erhöhung der Lese-/ Schreibreichweite eines RFID-Systems**
Device for increasing the read/write range of a RFID system
Dispositif d'augmentation des capacités de lecture/écriture d'un système RFID

(43) Veröffentlichungstag der Anmeldung: 31.08.2011
(73) Patentinhaber: SKIDATA AG, 5083 Grödig/Salzburg (AT)
(72) Erfinder: Lechner, Walter, 5071 Wals (AT)
(74) Vertreter: Karakatsanis, Georgios

(56) Entgegenhaltungen:
- WO-A1-02/15139
- WO-A1-03/079305
- US-A1- 2009 084 846
- US-A1- 2009 309 703

## Beschreibung

Die vorliegende Erfindung bezieht sich auf eine Einrichtung zur Erhöhung der Lese-/Schreibreichweite eines RFID-Systems gemäß dem Oberbegriff des Patentanspruchs 1.

Aus dem Stand der Technik ist bekannt, insbesondere bei Zutrittskontrollvorrichtungen für Kraftfahrzeuge oder Personen RFID-Systeme zu verwenden, wobei die auf einer RFID-Karte abgelegte Zutrittsberechtigung mit einer RFID-fähigen Lese-/Schreibeinrichtung ausgelesen wird; hierbei kann von der RFID-fähigen Lese-/Schreibeinrichtung die RFID-Karte beschrieben werden, um beispielsweise die Zutrittsberechtigung zu entwerten.

Die Lese-/Schreibreichweite derartiger RFID-Systeme liegt in der Regel zwischen ca. 25 und 35 cm für RFID-Karten im Scheckkartenformat nach dem ISO 7810 Standard.

Diese Reichweite erweist sich jedoch oft als nicht ausreichend; bei aus dem Stand der Technik bekannten Zutrittskontrollvorrichtungen für Fahrzeuge ist es aufgrund der geringen Reichweite des RFID-Systems erforderlich, das Autofenster zu öffnen und die RFID-Karte mit der abgelegten Zutrittsberechtigung in der Nähe der Leseeinrichtung der Zutrittskontrollvorrichtung zu führen, um das Auslesen der Zutrittsberechtigung zu ermöglichen, erweist sich insbesondere bei schlechtem, regnerischem Wetter als sehr unkomfortabel.

Aus der DE 29921752 U1 ist eine Antennenanordnung von Schreiblesegeräten bekannt, mit denen kontaktlose Transponder innerhalb einer bestimmten Distanz beschrieben und/oder gelesen werden können. Hierbei weisen die Schreiblesegeräte mindestens eine Schreibleseantenne auf, wobei neben der Schreibleseantenne mindestens eine Blindantenne angeordnet ist, welche auf gleiche oder auch annähernd gleiche Resonanzfrequenz wie die Resonanzfrequenz der Schreibleseantenne eingestellt ist. Die Blindantenne ist über ein elektromagnetisches Feld an die Schreibleseantenne gekoppelt und bildet ihrerseits ein elektromagnetisches Feld aus, wodurch die Lese-/Schreibreichweite des Systems erweitert wird. Die Blindantenne besteht gemäß der DE 29921752 U1 aus einer Antennenwicklung und dazu parallel und/oder in Reihe geschalteten Kondensatorelementen.

Des weiteren ist aus der DE 20110926 U1 eine Transponder-Leseeinheit bekannt, umfassend eine aktive Sende- und/oder Empfangsantenne und eine mit der Sende- und/oder Empfangsantenne elektrisch verbundene Sende- und/oder Empfangseinheit, wobei die aktive Sende- und/oder Empfangsantenne mittels der Sende- und/oder Empfangseinheit mit einer Trägerfrequenz betrieben wird. Hierbei ist im Feldbereich der aktiven Sende- und/oder Empfangsantenne mindestens eine mit der Sende- und/oder Empfangseinheit nicht elektrisch verbundene passive Antenne angeordnet. Gemäß der DE 20110926 U1 wird die passive Antenne von den elektromagnetischen Feldern der aktiven Antenne zu Schwingungen angeregt, wodurch sie zu einem aktiven Strahler wird, was in einer Erhöhung der Reichweite des Systems resultiert.

Aus der NO 02/15139 A1, die den Oberbegriff des Anspruchs 1 bildet, geht eine RFID-Tag-Baugruppe hervor, bei der zur Erhöhung der Lese-/Schreibreichweite mindestens ein auf einem Substrat angeordneter passiver Resonanzkreisverstärker mit einer Antenne und einem Schwingkreiskondensator vorgesehen ist. Hierbei kann das Substrat gefaltet werden, um eine L-förmige Konfiguration zu erhalten, was das Anbringen des Substrats auf einem Container vereinfachen soll.

Die aus dem Stand der Technik bekannten Einrichtungen zur Erhöhung der Lese-/Schreibreichweite von RFID-Systemen erweisen sich aufgrund ihrer Form und Dimensionierung als unhandlich. Des Weiteren ist der Platzbedarf der bekannten passiven Antennen relativ groß.

Der vorliegenden Erfindung liegt die Aufgabe zugrunde, ausgehend von dem genannten Stand der Technik, eine Einrichtung zur Erhöhung der Lese-/Schreibreichweite von RFID-Systemen anzugeben, welche eine einfache Handhabung ermöglicht und den Komfort für den Benutzer erhöht.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einrichtung zur Erhöhung der Lese-/Schreibreichweite von RFID-Systemen vorgeschlagen, welche einen passiven Resonanzkreisverstärker umfasst, welcher eine Antenne mit lediglich einer Windung und einen Schwingkreiskondensator aufweist und gemeinsam mit einer innerhalb der Antenne liegenden RFID-Karte auf die verwendete RFID-Trägerfrequenz, welche üblicherweise 13,56 MHz beträgt, abgeglichen wird, wobei der passive Resonanzkreisverstärker einfach oder mehrfach faltbar oder klappbar ausgeführt ist.

Im Rahmen einer vorteilhaften Ausführungsform der Erfindung ist der passive Resonanzkreisverstärker an einem Antennenträger angebracht, welcher die Form eines Rechtecks aufweist und aus einem Isolatormaterial hergestellt ist, wobei der passive Resonanzkreisverstärker am Rand des Rechtecks angebracht ist. Gemäß der Erfindung weist das Rechteck eine flexible Faltstelle auf, die sich zwischen zwei gegenüberliegenden Seiten des Rechtecks erstreckt und vorzugsweise diese Seiten in der Mitte und im rechten Winkel schneidet, sodass durch einfaches Falten des Rechtecks der Platzbedarf des passiven Resonanzkreisverstärkers 1 halbiert wird.

Besonders vorteilhaft ist es, wenn der Antennenträger nur aus dem Rand des Rechtecks besteht; zudem kann gemäß der Erfindung der Rand des Antennenträgers durch den passiven Resonanzkreisverstärker gebildet sein.

Gemäß einer weiteren vorteilhaften Ausführungsform der Erfindung kann der rechteckig ausgeführte Antennenträger nach dem Prinzip eines doppelt faltbaren Spielbretts doppelt faltbar ausgeführt sein, wobei der passive
Resonanzkreisverstärker am Rand des Rechtecks angebracht ist.

Zu diesem Zweck weist der Antennenträger eine erste flexible Faltstelle auf, die sich zwischen zwei gegenüberliegenden Seiten des Rechtecks erstreckt und vorzugsweise diese Seiten in der Mitte und im rechten Winkel schneidet, wobei eine zweite flexible Faltstelle vorgesehen ist, die eine weitere Seite des Rechtecks in der Mitte und im rechten Winkel schneidet und sich bis zur Mitte des Rechtecks hin erstreckt.

Entlang einer gedachten Fortsetzung der zweiten flexiblen Faltstelle von der Mitte des Rechtecks bis zu der der Seite, die die flexible Faltlinie schneidet, gegenüberliegenden Seite des Rechtecks ist der Antennenträger unterbrochen ausgeführt, wobei die gegenüberliegenden Seiten des unterbrochenen Randes durch einen leitenden Federkontakt oder eine Flexileitung miteinander verbunden oder mittels einer Stift/Buchse Kombination miteinander verbindbar sind, wodurch der am Rand des Antennenträgers angebrachte passive Resonanzverstärker seine Funktionalität behält.

Auch in diesem Fall kann der Antennenträger durch den Rand des Rechtecks gebildet werden; vorzugsweise wird der Rand des Rechtecks durch den passiven Resonanzkreisverstärker gebildet, sodass der Platzbedarf des passiven Resonanzkreisverstärkers sehr gering ist.

Für den Fall, dass die beiden Teile des unterbrochen ausgeführten Randes des Rechtecks durch einen Federkontakt oder eine Flexileitung miteinander verbunden sind, entsteht der Vorteil, dass die Antenne auch im gefalteten Zustand immer geschlossen ist. In diesem Fall ist keine Aktion seitens des Benutzers erforderlich, um die beiden Teile des unterbrochen ausgeführten Randes des Rechtecks, die den passiven Resonanzkreisverstärker enthalten oder bilden miteinander zu verbinden, was beispielsweise über eine Stift/Buchse Kombination erfolgen kann.

Gemäß einer weiteren vorteilhaften Ausführungsform der Erfindung weist der passive Resonanzkreisverstärker einen Antennenträger auf, welcher mindestens drei und vorzugsweise vier etwa gleich lange Elemente aufweist, die nach dem Faltprinzip eines Meterstabs (Zollstocks) zu einem, beispielsweise für den Fall, dass vier Elemente vorgesehen sind, rechteckigen bzw. quadratischen Antennenträger ausgeklappt werden können. Vorzugsweise erfolgt das Ein- und Ausklappen der Elemente federunterstützt, wobei die Elemente in der Zielposition im ausgeklappten Zustand einrasten.

Vorzugsweise sind die Elemente aus einem leitfähigen Material hergestellt, sodass der Antennenträger die Antenne des passiven Resonanzkreisverstärkers bildet.

Das leitfähige Material gemäß der Erfindung kann Metall oder ein leitfähiger Kunststoff sein.

Besonders vorteilhaft ist es, wenn der Antennenträger oder der passive Resonanzkreisverstärker eine Halterung aus Isolatormaterial für zumindest eine RFID-Karte aufweist, welche mit dem passiven Resonanzkreisverstärker verwendet wird, um die Lese-/Schreibreichweite eines RFID-Systems zu erhöhen. Hierbei kann zum Auslesen einer auf der RFID-Karte abgelegten Zugangsberechtigung die Karte aus der Halterung entnommen werden und der Antennenträger je nach Ausführung ausgeklappt oder entfaltet werden, wobei anschließend die Karte zum Auslesen von einer Leseeinrichtung innerhalb des passiven Resonanzkreisverstärkers geführt wird.

Gemäß einer vorteilhaften Weiterbildung der Erfindung kann die Halterung für die zumindest eine RFID-Karte als Teleskophalterung, beispielsweise nach dem Prinzip einer zusammenschiebbaren Radioantenne ausgeführt sein, die derart ausgelegt ist, dass immer gewährleistet ist, dass bei ausgefahrener Teleskophalterung die RFID-Karte zur Erhöhung der Lese-/Schreibreichweite eines RFID-Systems innerhalb des passiven Resonanzkreisverstärkers liegt. Ferner entsteht dadurch der Vorteil, dass die erfindungsgemäße Einrichtung mit einer Hand bedient werden kann, da der Benutzer lediglich den passiven Resonanzkreisverstärker vor der entsprechenden Leseeinrichtung zu halten braucht.

Gemäß einer weiteren Ausführungsform der Erfindung ist es möglich, die Antenne und den Schwingkreiskondensator des passiven Resonanzkreisverstärkers in Alltagsgegenständen zu integrieren, beispielsweise in eine CD-Hülle oder in einen Schlüsselanhänger.

Ferner ist es möglich, den passiven Resonanzkreisverstärker Antenne aus Metallfäden zu bilden, die beispielsweise in ein Kleidungsstück integriert sein können. Hierbei kann das Kleidungsstück innerhalb der von dem passiven Resonanzkreisverstärker definierten Fläche eine Halterung für zumindest eine RFID-Karte aufweisen, wodurch in vorteilhafter Weise ein Hands-Free-Prinzip mit großer Reichweite realisiert wird. Hierbei ist der passive Resonanzkreisverstärker im Sinne der Erfindung faltbar oder zusammenrollbar ausgeführt.

Die Erfindung wird im Folgenden anhand der beigefügten Figuren beispielhaft näher erläutert. Es zeigen:
Figur 1: zwei Prinzipdarstellungen des passiven Resonanzkreisverstärkers zur Veranschaulichung des zugrunde liegenden Funktionsprinzips;
Figur 2: eine schematische Darstellung einer ersten Ausführungsform eines erfindungsgemäßen passiven Resonanzkreisverstärkers;
Figur 3: eine schematische Ansicht einer weiteren Ausführungsform eines erfindungsgemäßen passiven Resonanzkreisverstärkers;
Figur 4: eine schematische Ansicht einer dritten erfindungsgemäßen Ausführungsform eines passiven Resonanzkreisverstärkers;
Figur 5: eine schematische Darstellung des Prinzips eines nach dem Faltprinzip eines Meterstabs ausgeführten passiven Resonanzkreisverstärkers in eingeklapptem und ausgeklapptem Zustand;
Figur 6: eine Darstellung einer ersten Variante zum Entfalten eines nach dem Meterstabprinzip ausgeführten passiven Resonanzkreisverstärkers und
Figur 7: eine Darstellung zur Veranschaulichung einer zweiten Variante der Entfaltung eines nach dem Meterstabprinzip ausgeführten passiven Resonanzkreisverstärkers.

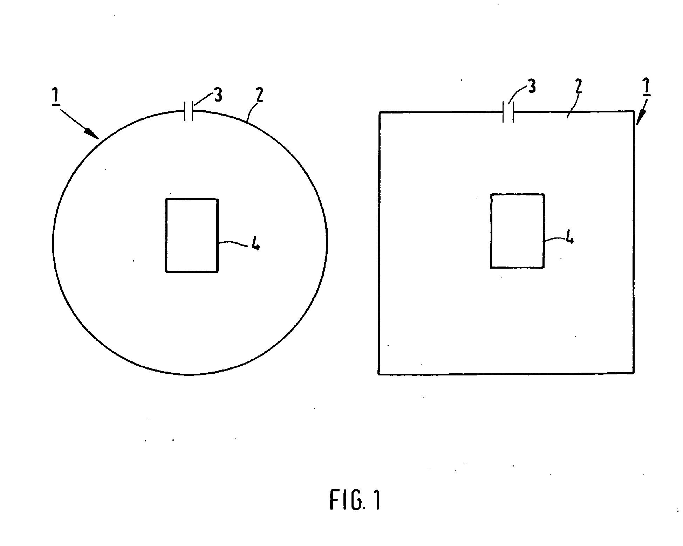

Im linken Teil der Figur 1 ist ein erfindungsgemäßer passiver Resonanzkreisverstärker 1 dargestellt, welcher rund ausgeführt ist und eine Antenne 2 mit lediglich einer Windung und einen Schwingkreiskondensator 3 aufweist. Ferner ist eine innerhalb des passiven Resonanzkreisverstärkers liegende RFID-Karte 4 dargestellt, welche gemeinsam mit dem passiven Resonanzkreisverstärker auf die verwendete RFID-Trägerfrequenz, welche üblicherweise 13,56 MHz beträgt, abgeglichen wird. Hierbei wird der passiver
Resonanzkreisverstärker 1 von den elektromagnetischen Feldern einer aktiven Antenne, beispielsweise der Antenne einer Leseeinrichtung zu Schwingungen angeregt, wodurch sie als aktiver Strahler dient, wodurch die Lese/Schreibreichweite eines RFID-Systems in vorteilhafter Weise erhöht wird.

Im rechten Teil der Figur 1 ist ein erfindungsgemäßer passiver Resonanzkreisverstärker 1 dargestellt, welcher rechteckig ausgeführt ist; gemäß der Erfindung kann der passive Resonanzkreisverstärker 1 beliebige Formen annehmen.

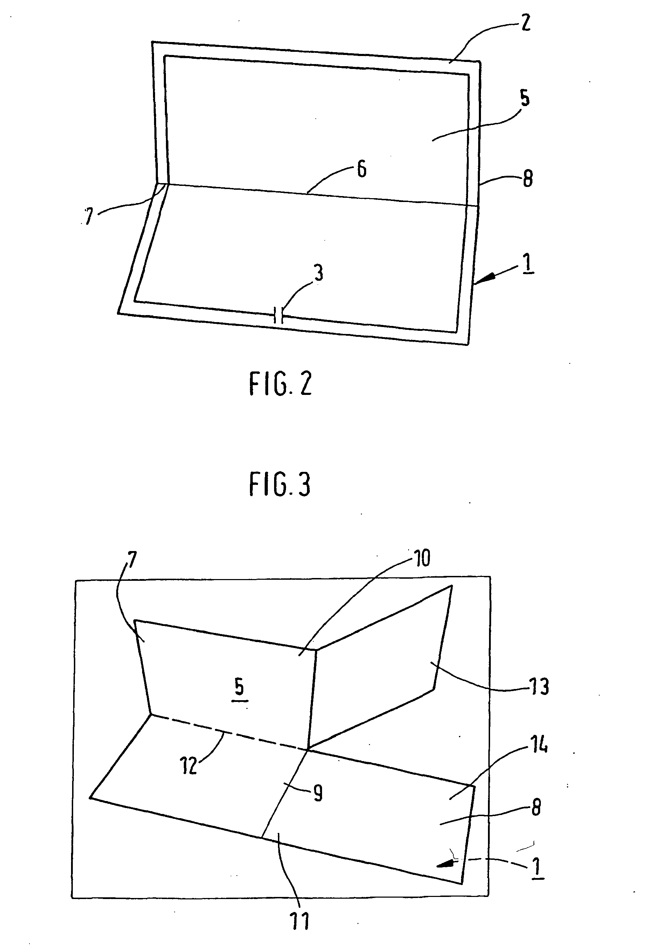

Gemäß der Erfindung ist vorgesehen, dass der passive Resonanzkreisverstärker 1 faltbar ausgeführt ist; Gegenstand der Figur 2 ist ein passiver Resonanzkreisverstärker 1, welcher einfach faltbar ausgeführt ist.

Bei dem in Figur 2 gezeigten Beispiel ist der passive Resonanzkreisverstärker 1 an einem Antennenträger 5 angebracht, welcher die Form eines Rechtecks aufweist und aus einem Isolatormaterial hergestellt ist, wobei der passive Resonanzkreisverstärker am Rand des Rechtecks angebracht ist. Gemäß der Erfindung weist das Rechteck eine flexible Faltstelle 6 auf, die sich zwischen zwei gegenüberliegenden Seiten 7, 8 des Rechtecks erstreckt und vorzugsweise diese Seiten 7, 8 in der Mitte und im rechten Winkel schneidet, sodass durch einfaches Falten des Rechtecks der Platzbedarf des passiven Resonanzkreisverstärkers 1 halbiert wird.

Besonders vorteilhaft ist es, wenn der Antennenträger nur aus dem Rand des Rechtecks besteht; des Weiteren kann der Rand des Rechtecks durch den passiven Resonanzkreisverstärker gebildet sein.

Gemäß einer weiteren vorteilhaften Ausführungsform der Erfindung, die Gegenstand der Figur 3 ist, ist der rechteckig ausgeführte Antennenträger 5 nach dem Prinzip eines doppelt faltbaren Spielbretts doppelt faltbar ausgeführt; der passive Resonanzkreisverstärker ist hierbei am Rand des Rechtecks angebracht.

Bezugnehmend auf Figur 3 weist der Antennenträger 5 eine erste flexible Faltstelle 9 auf, die sich zwischen zwei gegenüberliegenden Seiten 10, 11 des Rechtecks erstreckt und vorzugsweise diese Seiten in der Mitte und im rechten Winkel schneidet. Ferner ist eine zweite flexible Faltstelle 12 vorgesehen, die eine weitere Seite 7 des Rechtecks in der Mitte und im rechten Winkel schneidet und sich bis zur Mitte des Rechtecks hin erstreckt. Entlang einer gedachten Fortsetzung der zweiten flexiblen Faltstelle 12 von der Mitte des Rechtecks bis zu der der Seite 7, die die flexible Faltlinie 12 schneidet, gegenüberliegenden Seite 8 des Rechtecks ist der Antennenträger unterbrochen ausgeführt, wobei die gegenüberliegenden Seiten 13, 14 des unterbrochenen Randes durch einen leitenden Federkontakt oder eine Flexileitung miteinander verbunden oder mittels einer Stift/Buchse Kombination miteinander verbindbar sind, wodurch der am Rand des Antennenträgers angebrachte passive Resonanzverstärker seine Funktionalität behält.

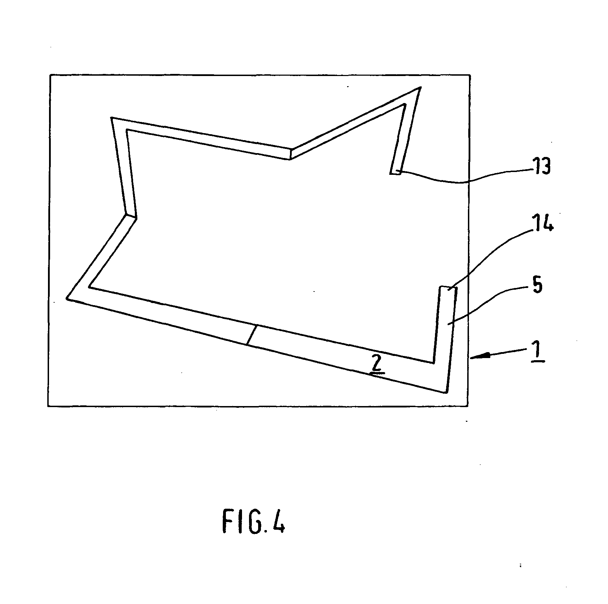

Wie in Figur 4 gezeigt, kann der Antennenträger 5 durch den Rand des Rechtecks gebildet werden, der vorzugsweise durch den passiven Resonanzkreisverstärker 1 gebildet ist, sodass der Platzbedarf des passiven Resonanzkreisverstärkers 1 sehr gering ist.

Für den Fall, dass die beiden Teile des unterbrochen ausgeführten Randes des Rechtecks durch einen Federkontakt oder eine Flexileitung miteinander verbunden sind, entsteht der Vorteil, dass die Antenne bzw. der passive Resonanzkreisverstärker auch im gefalteten Zustand immer geschlossen ist.

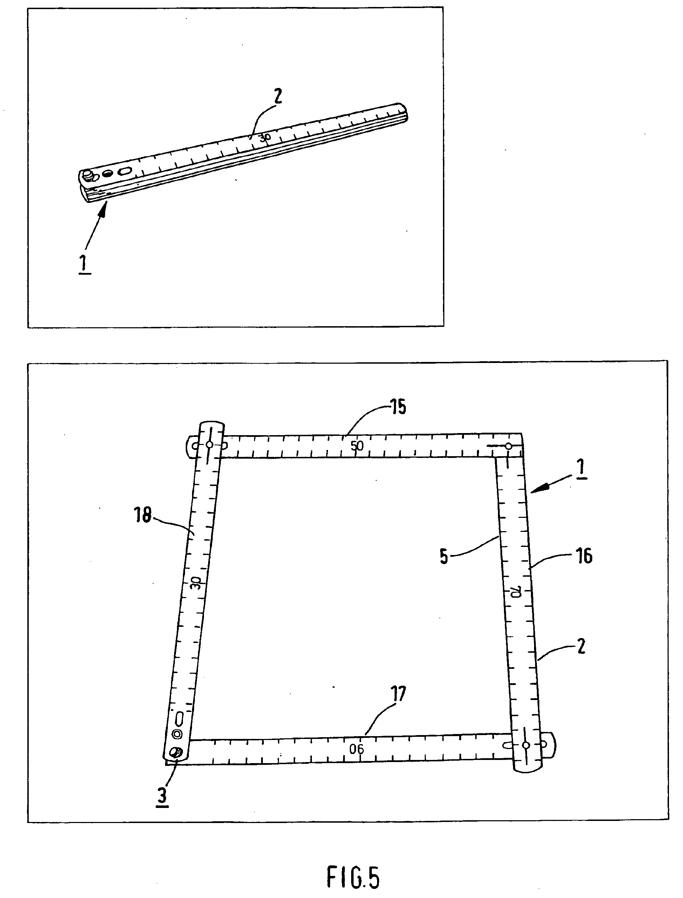

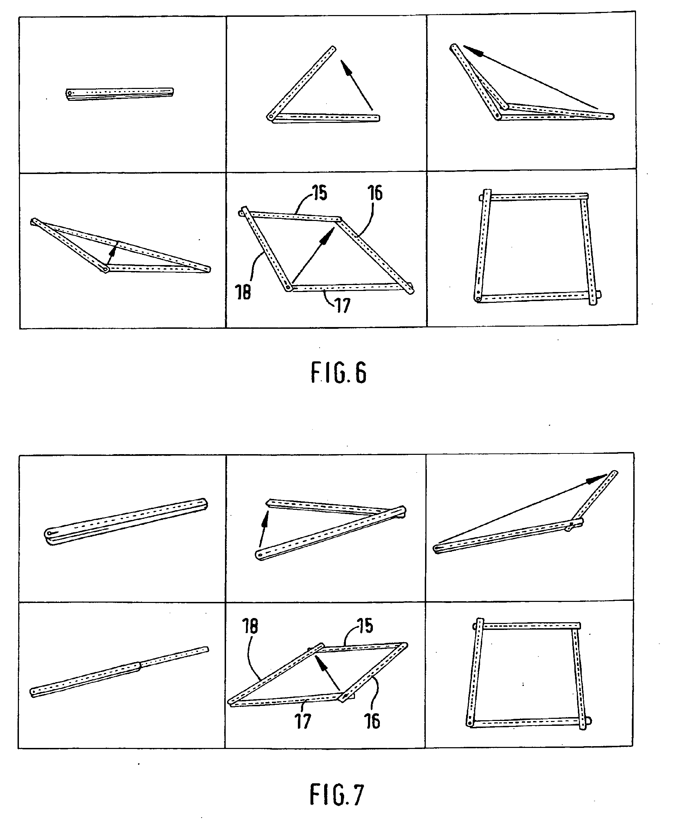

Gemäß einer weiteren Ausführungsform der Erfindung und bezugnehmend auf die beigefügten Figuren 5, 6 und 7 weist der passive Resonanzkreisverstärker 1 einen Antennenträger 5 auf, welcher vier etwa gleich lange Elemente 15, 16, 17, 18 aufweist, die nach dem Faltprinzip eines Meterstabs (Zollstocks) zu einem rechteckigen bzw. quadratischen Antennenträger 5 ausgeklappt werden können. Vorzugsweise erfolgt das Ein- und Ausklappen der Elemente 15, 16, 17, 18 federunterstützt, wobei die Elemente 15, 16, 17, 18 in der Zielposition im ausgeklappten Zustand einrasten. Der passive Resonanzkreisverstärker 1 ist in Figuren 5, 5, und 7 am Beispiel eines Zollstocks veranschaulicht.

Vorzugsweise sind die vier Elemente 15, 16, 17, 18 aus einem leitfähigen Material hergestellt, sodass der Antennenträger die Antenne des passiven Resonanzkreisverstärkers bildet; eine separate Antennenwicklung entfällt.

Im oberen Teil der Figur 5 ist der Antennenträger im eingeklappten Zustand dargestellt; der Antennenträger im ausgeklappten Zustand ist Gegenstand des unteren Teils der Figur 5.

Ein derartig ausgeführter passiver Resonanzkreisverstärker kann ausgeklappt werden, indem zuerst die im eingeklappten Zustand oben liegenden Elemente ausgeklappt werden, wie in Figur 6 gezeigt. Alternativ dazu können zuerst die zwei im eingeklappten Zustand zwischen dem obersten und dem untersten Element liegenden Elemente ausgeklappt werden. Um das Ausklappen zu erleichtern, können die Elemente 15, 16, 17, 18 geringfügig unterschiedlich lang ausgeführt sein.

## Patentansprüche

1. Einrichtung zur Erhöhung der Lese-/Schreibreichweite von RFID-Systemen, umfassend
einen Antennenträger (5), und
einen passiven Resonanzkreisverstärker (1), der eine Antenne (2) mit lediglich einer Windung und einen Schwingkreiskondensator (3) aufweist,
wobei der passive Resonanzkreisverstärker (1) mehrfach faltbar ausgeführt ist,
wobei der passive Resonanzkreisverstärker (1) am Rand des Antennenträgers (5) angebracht ist, und
wobei der Antennenträger (5) die Form eines Rechtecks und eine erste Faltlinie (9) aufweist, die sich zwischen zwei gegenüberliegenden Seiten (7, 8) des Rechtecks erstreckt und diese Seiten (7, 8) in der Mitte und im rechten Winkel schneidet,
**dadurch gekennzeichnet, dass**
der Antennenträger (5) eine zweite Faltlinie (12) aufweist, welche eine dritte Seite (7) des Rechtecks in deren Mitte und im rechten Winkel schneidet und sich bis zur Mitte des Rechtecks hin erstreckt,
wobei der Antennenträger (5) entlang einer gedachten Fortsetzung der zweiten Faltlinie (12) von der Mitte des Rechtecks bis zu der der dritten Seite (7) gegenüberliegenden vierten Seite (8) des Rechtecks unterbrochen ausgeführt ist und den Rand des Rechtecks entlang der vierten Seite (8) unterbricht,
wobei die beiden durch die Unterbrechung entstandenen Teile (13, 14) der vierten Seite (8) durch einen leitenden Federkontakt oder eine Flexileitung derart miteinander verbunden oder durch eine Stift/Buchse Kombination miteinander verbindbar sind, dass die Funktionalität des Resonanzkreisverstärkers (1) im gefalteten Zustand weiterhin besteht.

2. Einrichtung zur Erhöhung der Lese-/Schreibreichweite von RFID-Systemen, nach Anspruch 1, **dadurch gekennzeichnet, dass** der Antennenträger (5) durch den Rand des Rechtecks gebildet ist.

3. Einrichtung zur Erhöhung der Lese-/Schreibreichweite von RFID-Systemen, nach Anspruch 2, **dadurch gekennzeichnet, dass** der Antennenträger (5) durch den passiven Resonanzkreisverstärker (1) gebildet ist.

4. Einrichtung zur Erhöhung der Lese-/Schreibreichweite von RFID-Systemen, nach einem der vorangehenden Ansprüche, **dadurch gekennzeichnet, dass** der Antennenträger (5) oder der passive Resonanzkreisverstärker (1) eine Halterung aus Isolatormaterial für zumindest eine RFID-Karze aufweist.

5. Einrichtung zur Erhöhung der Lese-/Schreibreichweite von RFID-Systemen, nach Anspruch 4, **dadurch gekennzeichnet, dass** die Halterung für die zumindest eine RFID-Karte als Teleskophalterung ausgeführt ist, die derart ausgelegt ist, dass gewährleistet ist, dass bei ausgefahrener Teleskophalterung die RFID-Karte zur Erhöhung der Lese-/Schreibreichweite eines RFID-Systems innerhalb des passiven Resonanzkreisverstärkers (1) liegt.

## Claims

1. An apparatus for increasing the read/write range of RFID systems, comprising
an antenna support (5), and
a passive resonant circuit amplifier (1), which has an antenna (2) with just one winding and an oscillating circuit capacitor (3),
wherein the passive resonant circuit amplifier (1) is designed such that it can be folded a number of times,
wherein the passive resonant circuit amplifier (1) is attached at the edge of the antenna support (5), and
wherein the antenna support (5) has the shape of a rectangle and a first fold line (9), which extends between two opposite sides (7, 8) of the rectangle and cuts these sides (7, 8) in the centre at right angles,
**characterised in that**
the antenna support (5) has a second fold line (12), which cuts a third side (7) of the rectangle in the centre thereof and at right angles, and extends as far as the centre of the rectangle,
wherein the antenna support (5) is designed in an interrupted manner along an imaginary continuation of the second fold line (12) from the centre of the rectangle as far as the fourth side (8) of the rectangle opposite the third side (7) and interrupts the edge of the rectangle along the fourth side (8), wherein the two parts (13, 14) of the fourth side (8) created by the interruption are connected to one another by a conductive spring contact or a flexible cable or can be connected to one another by a pin/socket combination in such a manner that the functionality of the resonant circuit amplifier (1) still exists in the folded state.

2. The apparatus for increasing the read/write range of RFID systems according to claim 1, **characterised in that** the antenna support (5) is formed by the edge of the rectangle.

3. The apparatus for increasing the read/write range of RFID systems according to claim 2, **characterised in that** the antenna support (5) is formed by the passive resonant circuit amplifier (1).

4. The apparatus for increasing the read/write range of RFID systems according to one of the preceding claims, **characterised in that** the antenna support (5) or the passive resonant circuit amplifier (1) has a holder made from insulator material for at least one RFID card.

5. The apparatus for increasing the read/write range of RFID systems according to claim 4, **characterised in that** the holder for the at least one RFID card is designed as a telescopic holder, which is designed such that it is ensured that when the telescopic holder is extended, the RFID card for increasing the read/write range of an RFID system is located within the passive resonant circuit amplifier (1).

## Revendications

1. Dispositif pour l'augmentation de la capacité de lecture/écriture de systèmes RFID, comprenant
un support d'antenne (5), et
un amplificateur de circuit résonant passif (1), lequel présente une antenne (2) avec simplement un enroulement et un condensateur de circuit résonnant (3),
dans lequel l'amplificateur de circuit résonnant passif (1) est réalisé de manière à pouvoir être plié plusieurs fois,
dans lequel l'amplificateur de circuit résonnant passif (1) est mis en place sur le bord du support d'antenne (5), et
dans lequel le support d'antenne (5) présente la forme d'un rectangle et une première ligne de pliage (9), laquelle s'étend entre deux côtés (7, 8) situés en vis-à-vis du rectangle et coupe ces côtés (7, 8) au milieu et en angle droit,
**caractérisé en ce que**
le support d'antenne (5) présente une seconde ligne de pliage (12), laquelle coupe un troisième côté (7) du rectangle en son milieu et en angle droit et s'étend jusque vers le milieu du rectangle,
dans lequel le support d'antenne (5) est réalisé sans interruption le long d'un prolongement imaginaire de la seconde ligne de pliage (12), depuis le milieu du rectangle jusqu'au quatrième côté (8) situé en vis-à-vis du troisième côté (7) du rectangle, et interrompt le bord du rectangle le long du quatrième côté (8),
dans lequel les deux partie (13, 14) obtenues grâce à l'interruption du quatrième côté (8) sont reliées ensemble grâce à un contact à ressort conducteur ou une ligne-flexi, ou peuvent être reliées ensemble grâce à une combinaison de broche/douille de manière à ce que la fonctionnalité de l'amplificateur de circuit résonnant (1) subsiste toujours à l'état plié.

2. Dispositif pour l'augmentation de la capacité de lecture/écriture de systèmes RFID selon la revendication 1, **caractérisé en ce que** le support d'antenne (5) est formé par le bord du rectangle.

3. Dispositif pour l'augmentation de la capacité de lecture/écriture de systèmes RFID selon la revendication 2, **caractérisé en ce que** le support d'antenne (5) est formé par l'amplificateur de circuit résonnant passif (1).

4. Dispositif pour l'augmentation de la capacité de lecture/écriture de systèmes RFID selon l'une des revendications précédentes, **caractérisé en ce que** le support d'antenne (5) ou l'amplificateur de circuit résonnant passif (1) présente une fixation en matériau isolant pour au moins une carte RFID.

5. Dispositif pour l'augmentation de la capacité de lecture/écriture de systèmes RFID selon la revendication 4, **caractérisé en ce que** la fixation pour l'au moins une carte RFID est réalisée en tant que fixation télescopique, laquelle est étudiée de manière à garantir qu'en cas de fixation télescopique déployée, la carte RFID pour l'augmentation de la capacité de lecture/écriture d'un système RFID se situe à l'intérieur de l'amplificateur de circuit résonnant passif (1).
